Europäisches Patentamt

European Patent Office

Office européen des brevets

(11) Publication number: **0 274 884**
**A1**

# EUROPEAN PATENT APPLICATION

(21) Application number: 87311130.6

(51) Int. Cl.4 **E01F 7/02 , G05G 15/08**

(22) Date of filing: **17.12.87**

(30) Priority: **18.12.86 GB 8630287**

(43) Date of publication of application:
**20.07.88 Bulletin 88/29**

(84) Designated Contracting States:
**AT BE CH DE ES FR GB GR IT LI LU NL SE**

(71) Applicant: **G. Maunsell & Partners**
**Yeoman House 63 Croydon Road**
**Penge London SE20 7TP(GB)**

(72) Inventor: **Richmond, Brian**
**Ridge Cottage The Ridge**
**Woldingham Surrey(GB)**
Inventor: **Head, Peter Richard**
**10, Westfield Road**
**Beckenham Kent(GB)**

(74) Representative: **Hartley, David et al**
**c/o Withers & Rogers 4 Dyer's Buildings**
**Holborn**
**London, EC1N 2JT(GB)**

(54) **A windshield for an exposed structure.**

(57) A windshield for protecting the users of a bridge, grandstand or other structure, and having a plurality of pivotable vanes arranged to form a fence or barrier. Pivoting of the vanes is prevented by wind-load sensitive latch means until a predetermined level of wind-loading is reached whereupon the vanes are released to reduce the wind resistance of the fence. The shielding effect is thus sacrificed in unacceptably high wind connections to safeguard the wind shield structure.

EP 0 274 884 A1

# A WIND SHIELD FOR AN EXPOSED STRUCTURE

This invention relates to a wind shield for an exposed structure such as a bridge, or a grandstand or other building, the primary purposes of the shield being to provide protection to users from the effects of high winds.

Fixed wind shields, in which the barrier is formed using a series of vertical and/or horizontal members attached to posts, are known. However, such shields are subject to very high wind forces during extreme storm conditions, when shielding is not necessarily required as users may not venture out. Since aerodynamic drag is proportional to wind speed, these high wind forces can result in damage to the posts and sub-structure supporting the barrier. Also, the shields can result in destabilising aerodynamic forces on the sub-structure in high wind conditions.

Snow and sand fences are known in which vertical rotating tubes are self-orienting to suit different angles of wind incidence on the barrier, and wind responsive devices are known which raise or lower curtains to protect enclosures.

It is an object of this invention to provide a wind shield for a support structure which largely avoids the disadvantages of known fixed devices referred to above in a cost effective manner.

According to the invention, a wind shield for an exposed building or structure comprises a plurality of pivotable vanes and means controlling the pivoting of the vanes in response to wind loading. This allows efective wind protection to be given in all but extreme wind conditions when the vanes are pivoted to a position in which the porosity of the shield is increased, so reducing the loading on the shield, its support, and the structure itself. Potentially damaging unstable aerodynamic effects of known fixed shields can also be avoided. As a result, a wind shield can be provided for the structure without substantially increasing the strength of the structure to compensate for increased wind resistance.

In one embodiment of the invention, the vanes are generally parallel and spaced apart. They are also preferably parallel to a structure deck or working surface, and can each rotate about a longitudinal axis. The vanes are supported by posts, which may be between one and five meters high, depending on applications, lying essentially in a plane at right angles to the mean wind inclination. The preferred shield has a wind porosity that can be preset to a varying nominal value both longitudinally and vertically so that it can vary automatically with varying wind speed. The vanes are supported through bearings and can be restrained against rotation by a load sensitive latch or against rotation in a number of different phase angles by a series of such latches. one of which provides adjustment for an initial angle setting of each vane and hence, initial shield porosity. Each vane has a streamlined cross section (for example an airfoil section) so as to provide minimum drag when aligned parallel with the wind inclination and maximum drag when aligned at right angles to the wind.

The vanes may be made wind load sensitive by, for example arranging the axis of rotation of each vane to be off-centre from the centre of wind pressure on the vane when aligned at right angles to the wind, which is generally the initial setting for each vane. Under the pressure of the wind, a twisting moment is applied to each vane about the axis of rotation. Alternatively, separate wind-load sensing means may be provided to operate the latch or latches.

The load sensitive latch or latches may comprise an element. such as a torsion bar, connected to resist the wind load either directly on the vanes or on a separate wind-load sensing vane or sail, such that the applied strain increases with the wind load up to a predetermined level at which the element yields plastically. When the wind speed reaches this predetermined level the vanes rotate together to a position of reduced wind resistance. Where a series of latches is provided, the next latch then locks until the wind increases further. Thus, the wind forces on the wind shield structure are reduced in extreme wind conditions. In this way, when the vanes have moved to the alternative configurations for high speed winds, the chance of aerodynamic instability induced by the wind on the structure is reduced, allowing the sub-structure to be more cheaply fabricated. After a severe storm the vanes can be unlocked and returned to the initial latched position.

To vary the porosity in the region of other objects such as bridge towers, the width of the vanes may be varied along their length. The shield has the general advantage that the initial porosity can be adjusted in situ to suit local conditions, principally to obtain maximum shielding against cross wind effects dependent on the form of the support structure, the type of user, wind turbulence and direction, and other factors. In its preferred form the shield is largely maintenance free.

Embodiments of the invention will now be described by way of example with reference to the drawings in which

Figure 1 is a front elevation of a portion of windshield in accordance with the invention

Figure 2 is a sectioned side elevation of a vane of the windshield of Figure 1 in a position giving maximum drag;

Figure 3 is a sectional side elevation of the vane of Figure 2 in a position giving minimum drag;

Figure 4 is a diagrammatic cross-section of the line A-A in Figure 1 showing the windshield with the vanes in their position of maximum drag; and

Figure 5 is a diagrammatic cross-section on the line A-A in Figure 1 showing the windshield with vanes in their minimum drag position/

Figure 6 shows a windshield having wind load sensing vanes disposed at intervals along its length;

Figure 7 is a cross-section through a vane latch mechanism;

Figure 8 is an end view of a part of the latch mechanism taken on arrow A in Figure 7; and

Figure 9 is a sketch illustrating how a plurality of vanes are linked for control by a single latch mechanism.

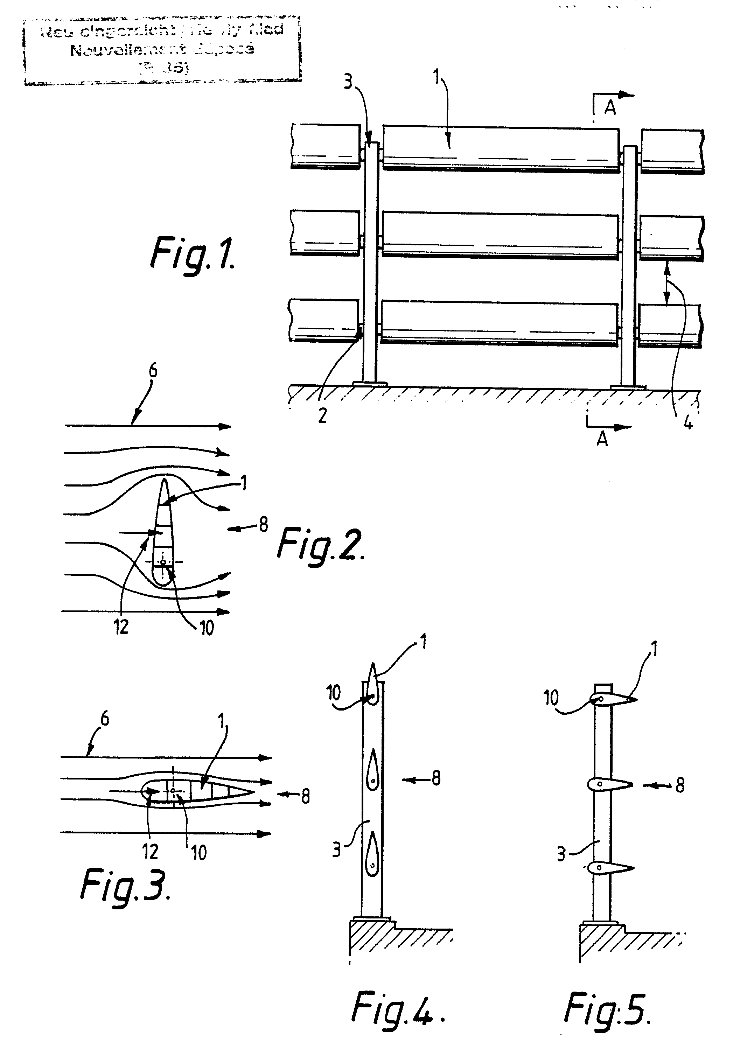

Referring to Figure 1, a windshield, which may for example extend along the sides of a long span bridge, has a plurality of vanes 1 arranged generally parallel to the structure (e.g. the bridge deck). The vanes are rotatable on bearings 2 which incorporate a latch mechanism.

The vanes are made from durable lightweight reinforced plastic or aluminium materials and are supported by posts 3 which may be between one and five meters high depending on the application. The wind porosity of the windshield can be increased or decreased by increasing or decreasing the initial spacing 4 of the vanes 1. This can be done by changing the width of the vanes 1, by changing the spacing between the bearings 2, or by changing the initial angle the vanes 1 are set at i.e. for maximum porosity the vanes are initially parallel with the wind direction and for minimum porosity the vanes are initially set at right angles to the wind direction. The latter method is the most convenient as it does not involve changing the vanes but only their initial rotational position. However, vanes of different width may be used at different positions along the length of the shield. For example in the region of bridge towers or other objects. In addition, the width of the vanes may be varied in a vertical direction e.g. by using a narrower vane at the top edge of the shield, and a wider vane nearest the structure deck, to provide required wind flow characteristics. In some circumstances, it may be advantageous to vary the width of individual vanes along their length.

The latch mechanisms incorporated in the bearing 2 are load sensitive and are designed so that when the wind speed reaches predetermined levels the vanes 1 rotate with a high degree of reliability to the next phase position to reduce wind resistance, i.e. by increasing wind porosity of the shield, and the next latch then locks them until the wind speed increases further.

Referring to Figures 2 and 4, a vane 1 in the maximum drag position is oriented at right angles to the structure deck. The lines 6 show the path of the wind around the vanes 1 in this vertical position. The vane 1 here is at right angles to the wind direction 6, which is usually the initial rotational setting of each vane. Since the axis of rotation 10 does not coincide with the centre of wind pressure 12 on the vane 1 when it is in the vertical position, a twisting moment is applied to the vane about the axis of rotation 10. When the twisting moment reaches a predetermined level the vane 1 rotates to the next phase position reducing wind resistance of the vane. In this manner, the wind forces on the structure are reduced in extreme wind conditions, maintaining the drag loading on the structure at an acceptable level and largely preventing aerodynamic instability.

Referring to Figures 3 and 5 a vane 1 in the position of minimum drag lies parallel to the wind direction 6, giving significantly reduced wind resistance, due to the aerodynamic shape of the vane. The plane through the centre of wind pressure 12 and the axis of rotation 10 lies parallel to the direction of the wind 6 with the result that no twisting moment is applied to the vane 1 about the axis of rotation. Thereby maintaining the vane in its minimum drag position. This is the position that the vanes rotate to in severe wind conditions (e.g. upwards of 60 mph wind speed) to reduce the likelihood of aerodynamic excitation and destabilisation of the structure. Once the wind has reduced, the vanes can be unlocked and returned to the initial latched position.

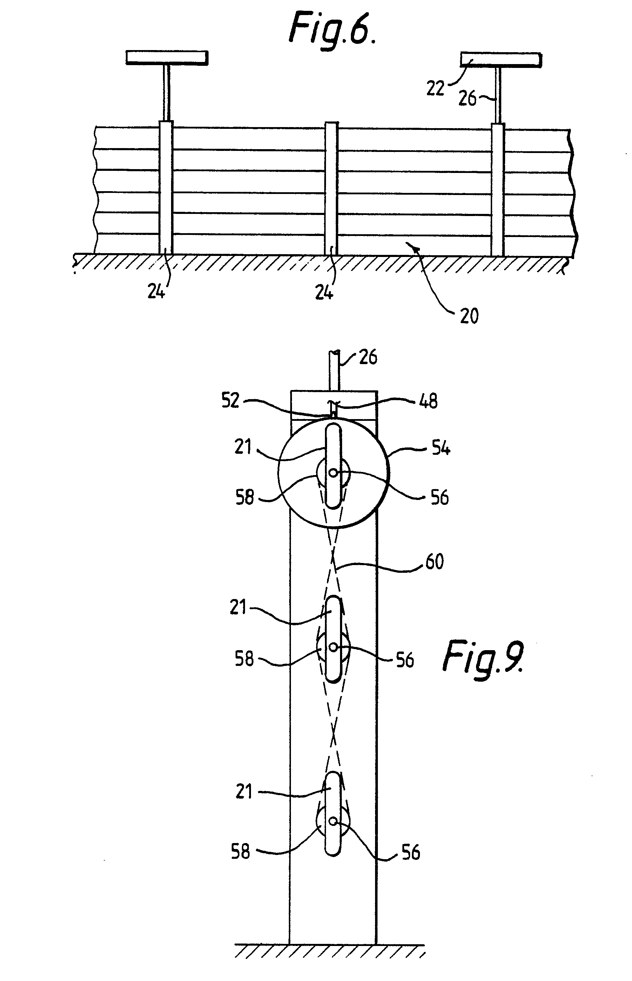

One example of a wind-load sensitive vane operated latch mechanism will now be described with reference to Figures 6 to 9. A typical windshield in the form of a fence 20 is shown in Figure 6. It has a wind-load sensing vanes or sails 22 spaced at intervals therealong, in this case mounted above alternate fence posts 24. The sensing vanes need not be mounted on the fence; they could be situated remotely. It is however important to ensure that they are placed well clear of disturbances from, for example, passing road vehicles.

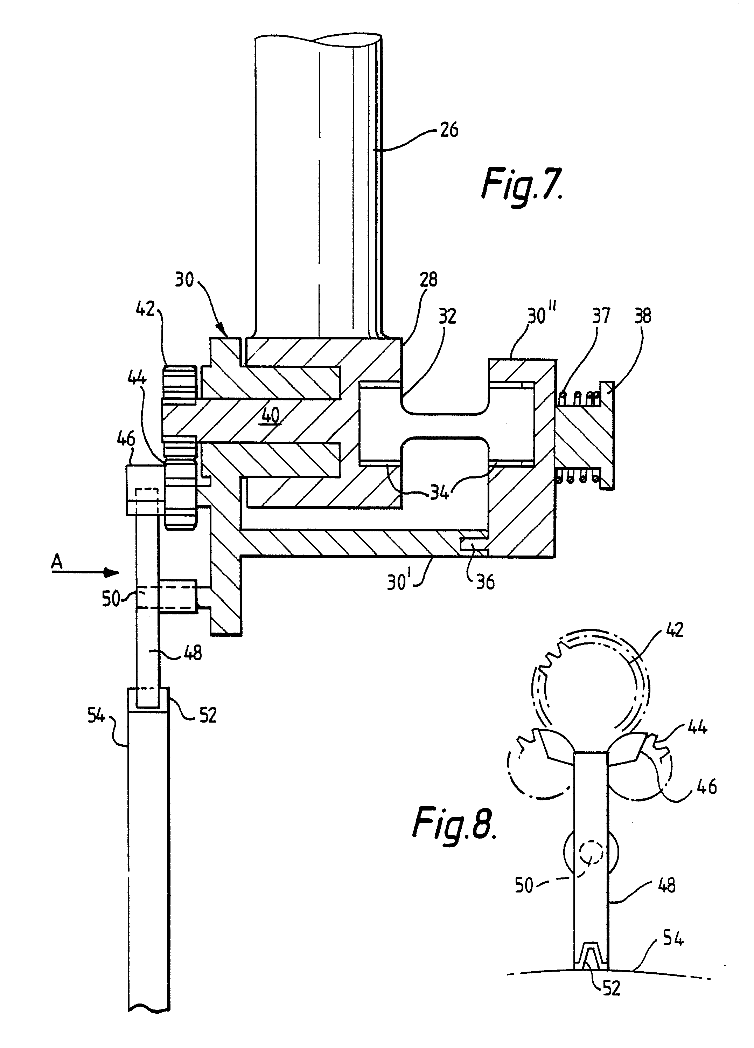

Each vane 22 is mounted at the upper end of the lever 26 which, as shown in Figure 7 is pivotally mounted by a bearing boss 28 at its other end for angular displacement relative to a housing 30 supported by the fence post 24. The torque from the wind load is resisted by a machined torsion bar 32 which is connected by splines 34 to the bearing boss 28 of lever 26 at one end and the housing 30 at the other. The housing consists of two parts 30'

and 30″ which are linked by dowels 36 and held together by a spring 37 which reacts against a stop 38 connected to housing part 30′. Movement of the housing part 30″ against the spring 37 provides clearance for inserting a bar 32 or releasing the spline connection to allow the bar 32 to rotate relative to the housing, when desired.

At a predetermined torque, which can be calibrated against the wind speed and torsion bar 32 capacity by small variations in the length of the vane 22 or lever 26, the torsion bar will rotate due to the plastic yield of the torsion bar 32 material which is mild steel. The large rotations at near constant torque that circular bars of this kind can permit without fracture ensure that a predetermined form of behaviour can be relied upon. Stops (not shown) are provided such that the lever 26 can only rotate through an angle of about 30 degrees in either direction.

Rotation of the lever 26 is transmitted along a shaft 40 which carries a gear wheel 42 in mesh with two pinions 44; the gear ratio being 1:2 (i.e. one rotation of wheel 42 causing two rotations of each pinion). Connected to each pinion is a "detent" 46 which consists of a segment of a cylinder. Between the two detents 46 is held one end of the lever 48 which is pivotally mounted at 50 intermediate its ends. The lever 48 has at the other end a recess which engages a projection or tooth 52 on a disc 54 mounted for rotation with the uppermost vane 21 of the windshield 20 (Figure 6). In the fixed position shown, the thrust from the wind load on the vanes 21 of the windshield 20 (Figure 6) acting through the tooth 52 and lever 48 is directed through the axis of the bearing and produces no tendency to rotate. When the wind load is such that the detents 46 rotate sufficiently following yielding of the torsion bar 32, the lever 48 and the vanes 21 and fixed disc 54 are released. Hence, the disc 54 and vanes 21 are free to rotate to a predetermined extent which may, for example, be determined by a stop (not shown) on the fence post or otherwise fixed for engagement to by tooth 52. Further, the stop may comprise a spring loaded latch or the like which positively holds the tooth 52 so preventing further movement of the vane in either direction.

It will be understood that the wind load sensitive vane operated latch described above enables release of the vanes for rotation in either direction depending on the wind direction but prevents any rotation until the lever 26 rotates sufficiently.

As will be seen from Figure 9, only the uppermost vane 21 is connected directly for rotation with the disc 54 of the latch. However, the latch is operable to release all of the vanes by virtue of their being linked for rotation together. The other vanes at lower levels rotate in phase with the upper vane about the axles 56 which are supported in bearings in the post. Gears 58 which are fixed to the ends of the vanes are connected by the toothed belt or chain 60 to keep the rotation of all vanes equal and in phase.

In summary, the windshield described above is a windload-sensitive variable porosity barrier which may be used on a structure where wind shielding for users is required on an everyday basis, but where the shielding may produce unacceptably high static and dynamic wind forces on the structure during exceptional design wind conditions. A typical structure is an exposed bridge or a tall building. In severe conditions, the shielding effect is sacrificed to reduce the drag on the structure, allowing the structure to withstand relatively high wind forces for a given structure strength.

## Claims

1. A wind shield comprising a plurality of vanes which are pivotally mounted for movement to vary the wind resistance presented by the windshield, between a position of high wind resistance and at least one other position of reduced wind resistance, and wind-load sensitive latch means by which the vanes are held and operable to allow pivoting of the vanes to another position wherein the wind resistance is reduced, when in use, the wind loading reaches a predetermined level.

2. A windshield according to claim 1 wherein the vanes have a streamlined cross-section, preferably an airfoil section.

3. A windshield according to claim 1 or claim 2 wherein the vanes are elongate and each is mounted for pivotal movement about a longitudinal axis thereof, the vanes being arranged parallel to one another.

4. A windshield according to claim 3 wherein the said longitudinal axes lie in a common plane.

5. A windshield according to any one of claims 1 to 4 and in the form of a fence having a plurality of pivotable vanes between adjacent fence posts.

6. A windshield according to claim 5 wherein the vanes are arranged generally horizontally and are pivotally mounted at each end to the adjacent fence posts.

7 A windshield according to any one of claims 1 to 6 wherein a group of said vanes are linked for pivotal movement is unison, and the wind load-sensitive latch means is connected to one vane in the group.

8. A windshield according to any one of claims 1 to 7 wherein the latch means comprises an element connected to resist a wind load such that the strain applied to the element increases with the wind load, the element being adapted to yield at the said predetermined level of wind loading.

9. A windshield according to claim 8 wherein the said element is a torsion bar so fashioned as to yield plastically at the said predetermined level of wind loading.

10. A windshield according to claim 8 or claim 9 wherein the latch comprises a wind load sensing vane or sail arranged for movement to release the latch, said movement being resisted by virtue of a connection with the element whereby the strain applied to the element increases with wind loading.

**Fig.1.**

**Fig.2.**

**Fig.3.**

**Fig.4.**

**Fig:5.**

## Fig.6.

22 26

24 24 20

26

52 48
21 54
58 56

60

21
58 56

*Fig.9.*

21
58 56

0 274 884

Fig.7.

Fig.8.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | DE-A-2 616 778 (COLBERG)<br>* Page 5, line 22 - page 6, line 5; page 7, lines 4-21; page 9, lines 19-22; page 10, lines 5-9; page 13, lines 10,11; figures 1-5 * | 1,3-6 | E 01 F 7/02<br>G 05 G 15/08 |
| A | --- | 8 | |
| X | DE-A-2 614 568 (COLBERG)<br>* Page 5, lines 1,2,11-13; page 6, line 26 - page 7, line 3; page 8, lines 1-9,13-17,24-28; page 8, lines 8-12; page 10, line 23 - page 11, line 9; page 13, lines 16-26; figures 1-5,7,8 * | 1-5 | |
| A | --- | 7,8 | |
| A | US-A-1 749 068 (DEL REA DE LAND)<br>* Page 1, lines 1-9,38-41; page 3, lines 35-39,47-58; figures 6,7 * | 1,3-6 | |
| A | US-A-3 473 786 (LUEBKE)<br>* Column 5, lines 58-66; column 6, lines 9-13,15-18; figures 1,6,7 * | 1-6 | TECHNICAL FIELDS SEARCHED (Int. Cl.4) |
| A | FR-A-2 179 726 (FORGIALLUMINIO)<br>* Page 2, lines 26-34,38,39; figures 1,3 * | | E 01 F<br>E 01 D<br>E 04 B<br>E 04 H |
| A | DE-C- 767 844 (WAGNER & CO. WERKZEUGMASCHINENFABRIK)<br>* Page 1, lines 1-8,14-19; page 2, lines 1-10,73-75 * | 9 | E 06 B<br>A 01 G<br>F 16 D<br>F 16 F |
| A | FR-A-2 093 523 (KLINK)<br>* Page 1, lines 12-24,30-35 *<br>---      -/- | 9 | |

The present search report has been drawn up for all claims

| Place of search | Date of completion of the search | Examiner |
|---|---|---|
| THE HAGUE | 21-03-1988 | SCHUMAN R. |

EPO FORM 1503 03.82 (P0401)

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | AT-B- 333 175 (SOUCZEK) <br> * Whole document * <br> ----- | 10 | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 21-03-1988 | SCHUMAN R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    & : member of the same patent family, corresponding document

EPO FORM 1503 03.82 (P0401)